# EUROPÄISCHE PATENTSCHRIFT

(11) **EP 3 499 131 B1**
(45) Veröffentlichungstag und Bekanntmachung des Hinweises auf die Patenterteilung: **16.02.2022**
(21) Anmeldenummer: 18208853.4
(22) Anmeldetag: 28.11.2018
(51) Int. Cl.: F24C 15/16, F24C 15/08

(54) **BACKOFEN**
BAKING OVEN
FOUR AU CUISSON

(30) Priorität: 14.12.2017 DE 202017006448 U
(43) Veröffentlichungstag der Anmeldung: 19.06.2019
(73) Patentinhaber: Grass GmbH, 6973 Höchst (AT)
(72) Erfinder: Tiefnig, Roland, A-9905 Gaimberg (AT); Mair, Simon, A-9900 Lienz (DE)
(74) Vertreter: Patentanwälte Magenbauer & Kollegen Partnerschaft mbB

(56) Entgegenhaltungen:
- EP-A2- 1 750 061
- WO-A1-2007/061323
- CA-A- 1 185 930
- DE-A1- 19 825 323
- DE-A1-102009 029 463
- DE-A1-102009 047 017
- ES-A1- 2 413 097
- US-A- 1 936 124
- US-A- 2 133 639

## Beschreibung

Die Erfindung betrifft eine Erhitzungsvorrichtung in Form eines Backofens mit einem einen aufheizbaren Innenraum umschließenden Gehäuse, wobei der Innenraum rückseitig von einer Rückwand und vorderseitig von einer Tür begrenzt ist, die in einer Schließstellung eine Zugang zu dem Innenraum gestattende Gehäuseöffnung verschließt, wobei im Gehäuse wenigstens ein nach dem Öffnen der Tür aus dem Gehäuse entnehmbarer Gutträger für zu erhitzendes Gut aufgenommen ist.

Erhitzungsvorrichtungen dieser Art, beispielsweise wie aus den Dokumenten ES 2 413 097 A1 und WO 2007/061323 A1 bekannt, besitzen ein einen aufheizbaren Innenraum umschließendes Gehäuse, das auch als Muffel bzw. Backmuffel bezeichnet werden kann. Das Gehäuse besteht aus hitzebeständigem Material, beispielsweise Stahlmaterial. Bei herkömmlichen Erhitzungsvorrichtungen befinden sich an den Seitenwänden des Gehäuses Einschubleisten für Gutträger, im Falle eines Backofens Gargutträger in Form von Backblechen oder Gitterrosten. Die Erhitzungsvorrichtung ist vorderseitig von einer Tür begrenzt, die in der Regel als nach unten wegschwenkende Klappe ausgestaltet ist. Nach dem Öffnen der Tür ist der Innenraum des Gehäuses zugänglich und der Gutträger kann mitsamt des Gutes herausgezogen werden. Beim Öffnen der Tür entweicht die im Innenraum des Gehäuses befindliche erhitzte Luft nach außen.

Aufgabe der Erfindung ist es, eine Erhitzungsvorrichtung der eingangs erwähnten Art zu schaffen, die sich gegenüber herkömmlichen Erhitzungsvorrichtungen durch eine höhere Energieeffizienz auszahlt.

Diese Aufgabe wird durch einen Backofen mit den Merkmalen des unabhängigen Anspruchs 1 gelöst. Weiterbildungen der Erfindung sind in den Unteransprüchen dargestellt. Die erfindungsgemäße Erhitzungsvorrichtung zeichnet sich dadurch aus, dass im Innenraum eine Schottwand angeordnet ist, die durch Führungsmittel zwischen einer im Bereich der Rückwand befindlichen Betriebsposition und einer in den Bereich der Gehäuseöffnung herausgezogenen, die Gehäuseöffnung im Wesentlichen vollständig verschließenden Verschlussposition beweglich geführt ist.

Wenn die Tür geöffnet und der Gutträger herausgezogen wird, verschließt die Schottwand den Innenraum bzw. Hohlraum der Erhitzungsvorrichtung wieder und es geht lediglich einmal das gesamte Volumen des Innenraums an erhitzter Luft verloren. Die Schottwand fungiert in ihrer Verschlussposition als eine Art Tür oder Verschluss und erlaubt es zum einen, dass der Gutträger bequem entnommen werden kann bzw. bei geöffneter Tür gearbeitet werden kann, ohne dass weitere heiße Luft aus dem Innenraum nach außen strömt. Der Innenraum hinter der Schottwand kann sofort wieder auf Temperatur gebracht werden, obwohl die Tür geöffnet ist.

Bei einer Weiterbildung der Erfindung ist die Schottwand mittels Kopplungsmitteln mit dem wenigstens einen Gutträger derart gekoppelt, dass die Schottwand durch das Herausziehen des Gutträgers von der Betriebs- in die Verschlussposition bewegbar ist. Die Handhabe am Gutträger, wie es ohnehin bei den gängigen Erhitzungsvorrichtungen der Fall ist, bewirkt die Verlagerung der Schottwand von ihrer Betriebs- in die Verschlussposition. In der Verschlussposition befindet sich die Schottwand im Bereich der Gehäuseöffnung und verschließt diese im Wesentlichen vollständig, woraus folgt, dass der Gutträger sich zumindest teilweise, insbesondere fast vollständig außerhalb des Gehäuses befindet und daher bequem entnommen, beispielsweise auch seitlich gegriffen werden kann, bevor er von der Schottwand abgenommen wird.

Prinzipiell wäre es jedoch auch möglich, die Schottwand nicht durch das Herausziehen des Gutträgers von der Betriebs- in die Verschlussposition zu bewegen, sondern durch das Öffnen der Tür durch andersartige geeignete Kopplungsmittel von der Betriebs- in die Verschlussposition zu verlagern.

Bei einer Weiterbildung der Erfindung weisen die Kopplungsmittel wenigstens ein Hakenelement und wenigstens eine Hakenhalterung zur lösbaren Halterung des wenigstens einen Hakenelements auf. In besonders bevorzugter Weise ist das wenigstens eine Hakenelement am Gutträger und die Hakenhalterung an der Schottwand angeordnet. Es wäre prinzipiell jedoch auch möglich, das Hakenelement an der Schottwand und die Hakenhalterung am Gutträger anzuordnen. Die Anordnung des Hakenelements am Gutträger ist jedoch demgegenüber von Vorteil, da sie einfacher umsetzbar und daher kostengünstiger ist. Ferner lassen sich auch herkömmliche Gutträger nachträglich mit derartigen Hakenelementen, die auch als Einhängehaken bezeichnet werden könnten, ausstatten.

Besonders bevorzugt weist die Hakenhalterung an der Schottwand mehrere in Höhenrichtung der Schottwand übereinander liegende Einhängeglieder zum Einhängen eines zugeordneten Hakenelements auf.

Zweckmäßigerweise sind die Einhängeglieder in wenigstens einem in der Schottwand ausgebildeten, in Höhenrichtung verlaufenden Halterungsschlitz angeordnet und durchsetzen die Schlitzbreite des Halterungsschlitzes. Dies hat den Vorteil, dass an der Schottwand keine nach vorne, also in der Betriebsposition in Richtung Innenraum abstehenden Teile vorhanden sind, sondern die Einhängeglieder im Schlitz versenkt untergebracht sind, so dass die Schottwand insgesamt eine ebene Fläche bildet, die durch wenigstens einen, insbesondere zwei in Höhenrichtung verlaufende Halterungsschlitze unterbrochen ist.

Zweckmäßigerweise sind die Einhängeglieder stift- oder bolzenartig ausgebildet.

Bei einer Weiterbildung der Erfindung sind die Führungsmittel derart ausgebildet, dass sie einerseits an der Rückwand und andererseits an der Schottwand befestigt sind.

In erfindungsgemäßer Weise sind die Führungsmittel derart ausgebildet, dass hierbei kein Kontakt mit den Seitenwänden erfolgt. Die Führungsmittel sind einerseits an der Rückwand und andererseits an der Schottwand und der Umgehung der Seitenwände befestigt.

Es ist möglich, dass die Führungsmittel ein aus mehreren Führungsarmen bestehendes Führungsgestänge aufweisen, das nach Art einer Ziehharmonika beweglich ist und dabei die Schottwand zwischen der Betriebsposition und der Verschließposition führt. Als Alternative zum Ziehharmonika-Führungsgestänge wäre es auch möglich, eine Teleskopführung einzusetzen.

Zur Be- und Entlüftung des Innenraums des Gehäuses ist in der Schottwand zweckmäßigerweise wenigstens ein Lüftungsloch ausgebildet.

Erfindungsgemäß ist die Erhitzungsvorrichtung als Backofen ausgebildet. In diesem Fall könnte das Gehäuse auch als Muffel bezeichnet werden. Die Gutträger wären in diesem Fall Gargutträger. Die Gutträger, insbesondere Gargutträger, können tablet- oder gitterartig ausgebildet sein. Beispielsweise können die Gargutträger die Form eines Backblechs und/oder Backrosts bzw. Gitterrosts aufweisen. Zweckmäßigerweise sind dem Backofen mehrere solche Gargutträger zugeordnet, beispielsweise mehrere Backbleche oder Gitterroste, wobei es auch möglich ist, dass mehrere Gargutträger, beispielsweise Backbleche oder Gitterroste, gleichzeitig im Innenraum des Gehäuses aufgenommen sind und mittels ihrer Hakenelemente in zugeordnete Einhängeglieder an der Halterung der Schottwand eingehängt sind.

Ein bevorzugtes Ausführungsbeispiel ist in der Zeichnung dargestellt und wird im Folgenden näher erläutert. In der Zeichnung zeigen:
- Figur 1: Eine perspektivische Darstellung eines bevorzugten Ausführungsbeispiels der erfindungsgemäßen Erhitzungsvorrichtung, wobei sich die Schottwand der Erhitzungsvorrichtung in der Verschlussposition befindet.
- Figur 2: Die Erhitzungsvorrichtung von Figur 1, ohne Gehäuse, wodurch die Führungsmittel zur Führung der Schottwand gezeigt sind.
- Figur 3: Eine perspektivische Darstellung der Erhitzungsvorrichtung von Figur 1, mit Gehäuse, jedoch ohne Schottwand.

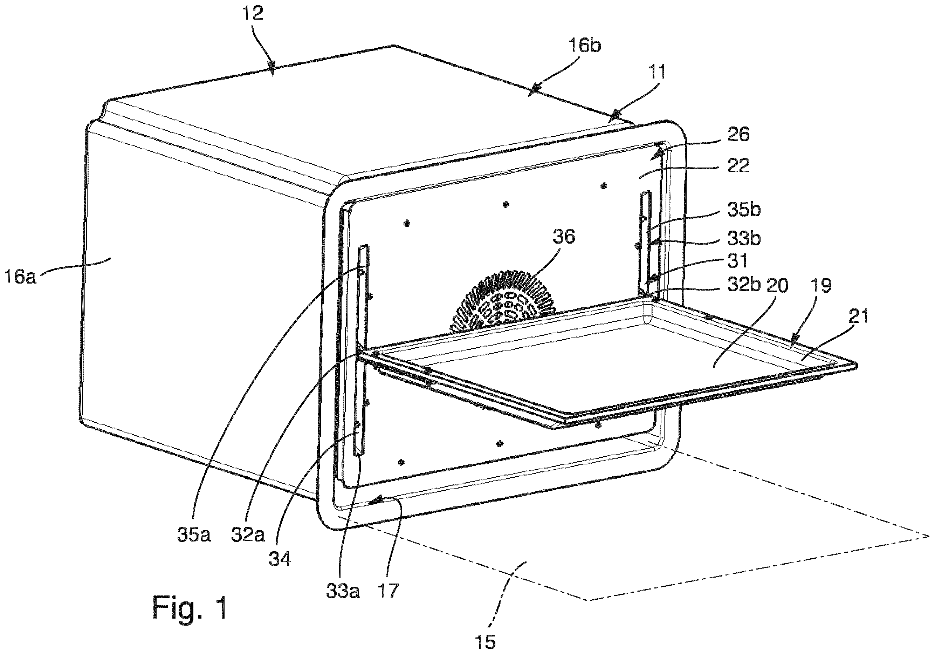

Die Figuren 1 bis 3 zeigen ein bevorzugtes Ausführungsbeispiel der erfindungsgemäßen Erhitzungsvorrichtung 11. Prinzipiell könnte die Erfindung jedoch auch bei einem Dampfgarer oder einer Mikrowelle eingesetzt werden, wenngleich es bei der Mikrowelle nicht darauf ankommt, Heißluft zurückzuhalten, sondern hier die Erfindung eher auf dem Schwerpunkt der leichteren Entnahme des Gutträgers liegt.

Wie insbesondere in Figur 1 gezeigt, weist die Erhitzungsvorrichtung 11 ein Gehäuse 12.

Das Gehäuse 12 ist im Regelfall und auch im beschriebenen Ausführungsfall quaderförmig oder kubisch ausgestaltet. Es besteht aus hitzebeständigem Material, insbesondere Stahlmaterial. Das Gehäuse 12 umschließt einen aufheizbaren Innenraum 13, der rückseitig von einer Rückwand 14 und vorderseitig von einer Tür 15 begrenzt ist. Bei der Tür 15 handelt es sich im gezeigten Beispielsfall um eine Backofen-Klappe, die in einer Schließstellung den Zugang zum Innenraum 13 verschließt. Das Gehäuse 12 umfasst ferner zwei einander gegenüberliegende Seitenwände 16a, 16b, einen Boden 17 und eine diesem gegenüberliegende Deckenwand 18.

Im Gehäuse 12 ist wenigstens ein Gutträger 19 für zu erhitzendes Gut aufgenommen. Der Gutträger 19 ist beispielhaft in Form eines Backblechs gezeigt, das einen Auflageabschnitt 20 und einen rings um den Auflageabschnitt 20 verlaufenden, erhöhten Randabschnitt 21 besitzt.

Im Innenraum 13 des Gehäuses 12 ist eine Schottwand 22 angeordnet, die durch Führungsmittel 23 zwischen einer im Bereich der Rückwand 14 befindlichen Betriebsposition 24 und einer im Bereich einer Gehäuseöffnung 25 herausgezogenen, die Gehäuseöffnung 25 im Wesentlichen vollständig verschließenden Verschlussposition 26 beweglich geführt ist.

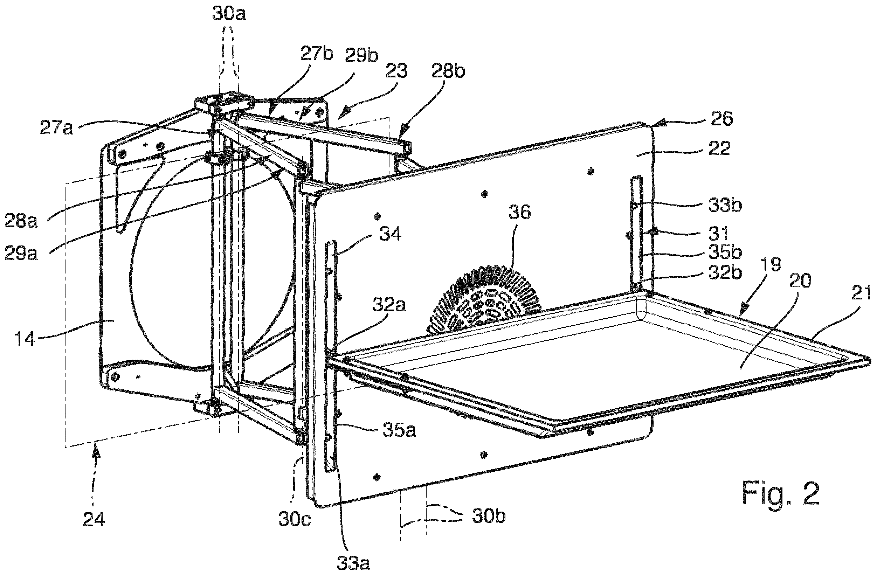

Wie insbesondere in den Figuren 1 und 2 gezeigt, ist die Schottwand 22 plattenartig ausgebildet und besteht ebenfalls aus Stahlmaterial.

Die Schottwand 22 besitzt eine rechteckige Form und verschließt die ebenfalls rechteckige Gehäuseöffnung 25 in der Verschlussposition 26 praktisch vollständig, wodurch der dann in der Verschlussposition 26 hinter der Schottwand 22 liegende Innenraum 13 sofort wieder auf Temperatur gebracht werden kann.

Wie bereits erwähnt, ist die Schottwand 22 mittels Führungsmitteln 23 zwischen der Betriebsposition 24 und der Verschlussposition beweglich geführt.

Wie insbesondere in Figur 2 gezeigt, sind die Führungsmittel 23 erfindungsgemäß derart ausgebildet, dass sie einerseits an der Rückwand 14 des Gehäuses 12 und andererseits an der Schottwand 22 befestigt sind. Es findet hierbei kein Kontakt mit den Seitenwänden 16a, 16b statt.

Wie insbesondere in Figur 2 gezeigt, umfassen die Führungsmittel 23 zwei Führungseinheiten 27a, 27b, die jeweils mit Querabstand zueinander einerseits am Gehäuse 12 und andererseits mit der Schottwand 22 verbunden sind.

Die Führungseinheiten 27a, 27b besitzen jeweils ein aus mehreren Führungsarmen 28a, 28b bestehendes Führungsgestänge 29a, 29b, das nach Art einer Ziehharmonika beweglich ist und dabei die Schottwand 22 zwischen der Betriebsposition 24 und der Verschlussposition 26 führt.

Wie insbesondere in Figur 2 gezeigt, sind die Führungsarme 28a, 28b als schwenkbar miteinander verbundene Schwenkarme ausgebildet.

Die Führungsgestänge 29a, 29b besitzen jeweils zwei Schwenkarme, von denen ein erster Schwenkarm um eine gehäuseseitige erste Schwenkachse 30a und ein zweiter Schwenkarm um eine gutträgerseitige zweite Schwenkachse 30b schwenkbar gelagert ist, und wobei die beiden Schwenkarme über eine dritte Schwenkachse 30c schwenkbar miteinander verbunden sind.

Den Führungsmitteln 23 ist ferner eine Synchronisationseinrichtung (nicht dargestellt) zur Synchronisation der Bewegung der Führungseinheiten 27a, 27b bei der Verfahrbewegung des an die Führungseinheiten 27a, 27b über die Schottwand 22 angekoppelten Gutträgers 19 vorhanden.

Wie bereits erwähnt, ist die Schottwand 22 mittels Kopplungsmitteln 31 mit dem wenigstens einen Gutträger 19 in Form des Backblechs derart gekoppelt, dass die Schottwand 22 durch Herausziehen des Gutträgers 19 von der Betriebs- in die Verschlussposition 26 bewegbar ist.

Die Kopplungsmittel 31 umfassen zwei Hakenelemente 32a, 32b am Gutträger 19 und zugeordnete Hakenhalterungen 33a, 33b an der Schottwand 22 zu lösbaren Halterung der Hakenelemente 32a, 32b.

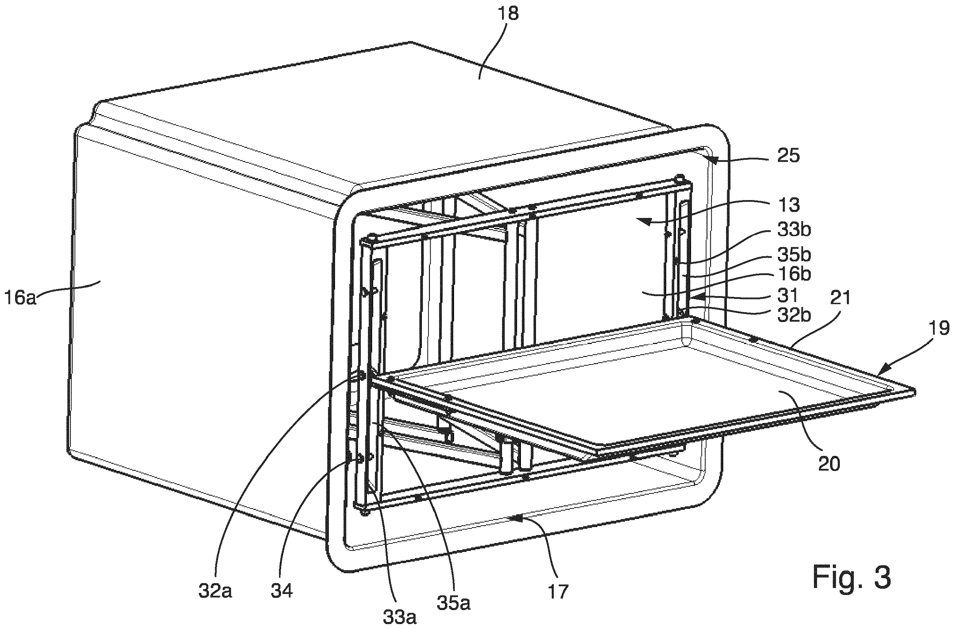

Wie insbesondere in Figur 3 gezeigt, sind die Hakenelemente 32a, 32b am Randabschnitt 21 des Backblechs befestigt und stehen von diesem nach hinten ab.

An der Schottwand 22 befinden sich zwei im Bereich der äußeren Randseiten liegende Hakenhalterungen 33a, 33b, die jeweils mehrere in Höhenrichtung der Schottwand 22 übereinanderliegende Einhängeglieder 34 zum Einhängen der zugeordneten Hakenelemente 32a, 32b am Backblech aufweist.

Wie insbesondere in Figur 2 gezeigt, sind die Einhängeglieder 34 als Stifte oder Bolzen ausgebildet und in zu den Hakenhalterungen 33a, 33b gehörenden in Höhenrichtung der Schottwand 22 verlaufenden Halterungsschlitzen 34a, 34b angeordnet, wobei sie die Schlitzbreite des zugeordneten Halterungsschlitzes 34a, 34b durchsetzen.

Im gezeigten Beispielsfall sind also im Bereich der beiden Seitenränder der Schottwand 22 jeweils in Höhenrichtung verlaufende Halterungsschlitze 35a, 35b vorgesehen, in denen drei insbesondere in regelmäßigen Abständen übereinanderliegende Einhängeglieder 34 angeordnet sind. Das Backblech lässt sich also je nach Wahl der Einhängeglieder 34 unterschiedlich hoch an der Schottwand anordnen.

Wie insbesondere in Figur 2 gezeigt, ist an der Schottwand 22 wenigstens ein Lüftungsloch 36, insbesondere ein aus mehreren Lüftungslöchern gebildetes Lochmuster, zur Be- und Entlüftung des Innenraumes 13 des Gehäuses 12 ausgebildet.

Im Betrieb des Backofens ist die Tür 15 geschlossen und die Schottwand 22 befindet sich in ihrer Betriebsposition 24 im Bereich der Rückwand 14 des Gehäuses 12. Der Innenraum 13 wird auf entsprechende Temperatur aufgeheizt, so dass auf den Backblechen oder Gitterrosten oder dergleichen befindliches Gargut auf entsprechende Temperatur gebracht wird. Nach Abschluss des Garvorgangs wird die Tür 15 bzw. die Backofen-Klappe geöffnet und das Backblech kann durch Handhabung aus dem Gehäuse 12 herausgezogen werden, wobei es im Gegensatz zu herkömmlichen Backöfen noch nicht vom Gehäuse 12 abgenommen wird, sondern das Herausziehen des Backblechs bewirkt eine Verlagerung der Schottwand 22 von der Betriebsposition 24 in die Verschlussposition 26, in der die Gehäuseöffnung 25 im Wesentlichen vollständig durch die Schottwand 22 verschlossen wird. Das Backblech befindet sich nun im Wesentlichen vollständig außerhalb des Gehäuses 12, ist jedoch noch an der Schottwand 22 angeordnet. Die Schottwand 22 schirmt das Innere des Gehäuses 12 ab, so dass dieses schnell wieder auf Temperatur gebracht werden kann. Das Backblech kann durch Aushängen der Hakenelemente aus den zugeordneten Einhängegliedern 34 an der Schottwand 22 von der Schottwand 22 abgenommen werden, dabei kann auch seitlich gegriffen werden, wodurch eine ungünstige Schräglage des evtl. mit Flüssigkeit wie Bratensaft bedeckten Auflageabschnitts des Backblechs vermieden werden kann.

## Patentansprüche

1. Backofen, mit einem einen aufheizbaren Innenraum (13) umschließenden Gehäuse (12), wobei der Innenraum (13) rückseitig von einer Rückwand (14) und vorderseitig von einer Backofen-Klappe (15) begrenzt ist, die in einer Schließstellung eine Zugang zu dem Innenraum (13) gestattende Gehäuseöffnung (25) verschließt, wobei das Gehäuse (12) zwei einander gegenüberliegende Seitenwände (16a, 16b) umfasst, und wobei im Gehäuse (12) wenigstens ein nach dem Öffnen der Backofen-Klappe (15) aus dem Gehäuse (12) entnehmbarer Gutträger (19) für zu erhitzendes Gut aufgenommen ist, wobei im Innenraum (13) eine Schottwand (22) angeordnet ist, die durch Führungsmittel (23) zwischen einer im Bereich der Rückwand (14) befindlichen Betriebsposition (24) und einer in den Bereich der Gehäuseöffnung (25) herausgezogenen, die Gehäuseöffnung (25) im Wesentlichen vollständig verschließenden Verschlussposition (26) beweglich geführt ist, wobei die Führungsmittel (23) derart ausgebildet sind, dass sie einerseits an der Rückwand (14) und andererseits an der Schottwand (22) befestigt sind, **dadurch gekennzeichnet, dass** die Führungsmittel (23) unter Umgehung der Seitenwände (16a, 16b) einerseits an der Rückwand (14) und andererseits an der Schottwand (22) befestigt sind, wobei die Führungsmittel (23) wenigstens ein aus mehreren Führungsarmen (28a, 28b) bestehendes Führungsgestänge (29a, 29b) aufweisen, das nach Art einer Ziehharmonika beweglich ist und dabei die Schottwand (22) zwischen der Betriebsposition (24) und der Verschlussposition (26) führt.

2. Backofen nach Anspruch 1, **dadurch gekennzeichnet, dass** die Schottwand (22) mittels Kopplungsmitteln (31) mit dem wenigstens einen Gutträger (19) derart gekoppelt ist, dass die Schottwand (22) durch Herausziehen des Gutträgers (19) von der Betriebs- in die Verschlussposition (26) bewegbar ist.

3. Backofen nach Anspruch 2, **dadurch gekennzeichnet, dass** die Kopplungsmittel (31) wenigstens ein Hakenelement (32a, 32b) und wenigstens eine Hakenhalterung (33a, 33b) zu lösbaren Halterung des wenigstens einen Hakenelements (32a, 32b) aufweisen.

4. Backofen nach Anspruch 3, **dadurch gekennzeichnet, dass** das wenigstens eine Hakenelement (32a, 32b) am Gutträger (19) und die Hakenhalterung (33a, 33b) an der Schottwand (22) angeordnet ist.

5. Backofen nach Anspruch 4, **dadurch gekennzeichnet, dass** die Hakenhalterung (33a, 33b) an der Schottwand (22) mehrere in Höhenrichtung der Schottwand (22) übereinanderliegende Einhängeglieder (34) zum Einhängen eines zugeordneten Hakenelements (32a, 32b) aufweist.

6. Backofen nach Anspruch 5, **dadurch gekennzeichnet, dass** die Einhängeglieder (34) in wenigstens einem in der Schottwand (22) ausgebildeten, in Höhenrichtung verlaufenden Halterungsschlitz (35a, 35b) angeordnet sind und die Schlitzbreite des Halterungsschlitzes (35a, 35b) durchsetzen.

7. Backofen nach Anspruch 6, **dadurch gekennzeichnet, dass** die Einhängeglieder (34) stiftartig ausgebildet sind.

8. Backofen nach einem der vorherigen Ansprüche, **dadurch gekennzeichnet, dass** in der Schottwand (22) wenigstens ein Lüftungsloch (36) ausgebildet ist.

9. Backofen nach einem der vorherigen Ansprüche, **dadurch gekennzeichnet, dass** der wenigstens eine Gutträger tablet- oder gitterartig ausgebildet ist, insbesondere ein Backblech und/oder Gitterrost ist.

## Claims

1. Baking oven, with a housing (12) surrounding a heatable interior (13), wherein the interior (13) is bounded by a rear wall (14) at the rear and at the front by a baking oven flap (15) which, in a closed position, closes a housing opening (25) permitting access to the interior (13), wherein the housing (12) includes two side walls (16a, 16b) lying opposite one another, and wherein there is accommodated in the housing (12) at least one shelf (19) for material to be heated, removable from the housing (12) after opening of the baking oven flap (15), wherein there is located in the interior (13) a bulkhead (22) which may be guided movably by guide means (23) between an operating position (24) located in the area of the rear wall (14), and a closed position (26), pulled out in the area of the housing opening (25) and closing the housing opening (25) substantially completely, wherein the guide means (23) are so designed that they are fixed on one side to the rear wall (14) and on the other side to the bulkhead (22), **characterised in that** the guide means (23), bypassing the side walls (16a, 16b), are fixed on one side to the rear wall (14) and on the other side to the bulkhead (22), wherein the guide means (23) have a at least one guide linkage (29a, 29b) comprised of several guiding arms (28a, 28b) and movable in the manner of an accordion, and at the same time guiding the bulkhead (22) between the operating position (24) and the closed position (26).

2. Baking oven according to claim 1, **characterised in that** the bulkhead (22) is so connected by connecting means (31) to the shelf or shelves (19) that the bulkhead (22) may be moved by pulling the shelf (19) from the operating into the closed position (26).

3. Baking oven according to claim 2, **characterised in that** the connecting means (31) have at least one hook element (32a, 32b) and at least one hook mounting (33a, 33b) for releasable mounting of the hook element or elements (32a, 32b).

4. Baking oven according to claim 3, **characterised in that** the hook element or elements (32a, 32b) are provided on the shelf (19) and the hook mounting (33a, 33b) on the bulkhead (22).

5. Baking oven according to claim 4, **characterised in that** the hook mounting (33a, 33b) on the bulkhead (22) has several suspension members (34) lying one above the other in the vertical direction of the bulkhead (22) for hanging an assigned hook element (32a, 32b).

6. Baking oven according to claim 5, **characterised in that** the suspension members (34) are arranged in at least one mounting slot (35a, 35b) made in the bulkhead (22) and running vertically, and pass through the slot width of the mounting slot (35a, 35b).

7. Baking oven according to claim 6, **characterised in that** the suspension members (34) are pin-like in form.

8. Baking oven according to any of the preceding claims, **characterised in that** at least one ventilation hole (36) is made in the bulkhead (22).

9. Baking oven according to any of the preceding claims, **characterised in that** the shelf or shelves is or are tablet- or grid-like, in particular a baking tray and/or grid.

## Revendications

1. Four de cuisson avec une enceinte (12) renfermant un espace intérieur (13) pouvant être chauffé, l'espace intérieur (13) étant délimité côté arrière par une paroi arrière (14) et côté avant par une porte de four de cuisson (15), qui ferme dans une position de fermeture une ouverture d'enceinte (25) donnant accès à l'espace intérieur (13), l'enceinte (12) comprenant deux parois latérales (16a, 16b) se faisant face l'une l'autre, et dans lequel au moins un support de produits (19) pouvant être retiré hors de l'enceinte (12) après l'ouverture de la porte de four de cuisson (15), pour des produits à réchauffer est logé dans l'enceinte (12), dans lequel est disposée, dans l'espace intérieur (13), une cloison étanche (22) qui est guidée par des moyens de guidage (23) de manière mobile entre une position de fonctionnement (24) se trouvant dans la zone de la paroi arrière (14) et une position de fermeture (26) fermant sensiblement totalement l'ouverture d'enceinte (25), ressortie dans la zone de l'ouverture d'enceinte (25), les moyens de guidage (23) étant réalisés de telle manière qu'ils soient fixés d'une part sur la paroi arrière (14) et d'autre part sur la cloison étanche (22),
**caractérisé en ce que** les moyens de guidage (23) sont fixés en contournant les parois latérales (16a, 16b) d'une part sur la paroi arrière (14) et d'autre part sur la cloison étanche (22), les moyens de guidage (23) présentant au moins une tringle de guidage (29a, 29b) constituée de plusieurs bras de guidage (28a, 28b), qui est mobile à la manière d'un accordéon et guide ce faisant la cloison étanche (22) entre la position de fonctionnement (24) et la position de fermeture (26).

2. Four de cuisson selon la revendication 1, **caractérisé en ce que** la cloison étanche (22) est couplée de telle manière à l'au moins un support de produits (19) au moyen de moyens de couplage (31) que la cloison étanche (22) peut être déplacée par la sortie du support de produits (19) depuis la position de fonctionnement dans la position de fermeture (26).

3. Four de cuisson selon la revendication 2, **caractérisé en ce que** les moyens de couplage (31) présentent au moins un élément de crochet (32a, 32b) et au moins un système de maintien de crochet (33a, 33b) pour le maintien amovible de l'au moins un élément de crochet (32a, 32b).

4. Four de cuisson selon la revendication 3, **caractérisé en ce que** l'au moins un élément de crochet (32a, 32b) est disposé sur le support de produits (19) et le système de maintien de crochet (33a, 33b) est disposé sur la cloison étanche (22).

5. Four de cuisson selon la revendication 4, **caractérisé en ce que** le système de maintien de crochet (33a, 33b) présente sur la cloison étanche (22) plusieurs organes de suspension (34) situés les uns au-dessus des autres dans le sens de la hauteur de la cloison étanche (22) pour suspendre un élément de crochet (32a, 32b) associé.

6. Four de cuisson selon la revendication 5, **caractérisé en ce que** les organes de suspension (34) sont disposés dans au moins une entaille de maintien (35a, 35b) s'étendant dans le sens de la hauteur, réalisée dans la cloison étanche (22) et traversent la largeur d'entaille de l'entaille de maintien (35a, 35b).

7. Four de cuisson selon la revendication 6, **caractérisé en ce que** les organes de suspension (34) sont réalisés à la manière de stylo.

8. Four de cuisson selon l'une quelconque des revendications précédentes, **caractérisé en ce qu'**au moins un trou d'aération (36) est réalisé dans la cloison étanche (22).

9. Four de cuisson selon l'une quelconque des revendications précédentes, **caractérisé en ce que** l'au moins un support de produits est réalisé à la manière d'une tablette ou d'une grille, en particulier est une tôle de cuisson et/ou une grille.
